Europäisches Patentamt

European Patent Office

Office européen des brevets

(19)

(11) **EP 1 234 686 A2**

(12) **EUROPÄISCHE PATENTANMELDUNG**

(43) Veröffentlichungstag:
  **28.08.2002 Patentblatt 2002/35**

(51) Int Cl.⁷: **B42C 19/02**

(21) Anmeldenummer: **02001072.4**

(22) Anmeldetag: **22.01.2002**

(84) Benannte Vertragsstaaten:
  **AT BE CH CY DE DK ES FI FR GB GR IE IT LI LU MC NL PT SE TR**
  Benannte Erstreckungsstaaten:
  **AL LT LV MK RO SI**

(30) Priorität: **27.02.2001 US 794525**

(71) Anmelder: **Heidelberger Druckmaschinen Aktiengesellschaft**
  **69115 Heidelberg (DE)**

(72) Erfinder: **Jackelen, Jeffrey A.**
  **Pittsford, NY 14534 (US)**

(74) Vertreter: **Franzen, Peter et al**
  **Heidelberger Druckmaschinen AG,**
  **Kurfürsten-Anlage 52-60**
  **69115 Heidelberg (DE)**

(54) **Verfahren zur Wahl einer Weiter- oder Endbearbeitungsvorrichtung für das digitale Drucken**

(57)  Verfahren zur Wahl von Weiter- und/oder Endbearbeitungsvorrichtungen (22, 24) zur Durchführung von Weiter- und/oder Endbearbeitungsoperationen für einen Drucklauf. Der Druckauftrag unterliegt Anforderungen derart, welche Weiter- und/oder Endbearbeitungsoperationen für einen Drucklauf durchgeführt werden müssen. Die Druckvorrichtung (20) umfasst Empfehlungen derart, welche Weiter- und/oder Endbearbeitungsoperationen für den Drucklauf ausgeführt werden können, aber nicht ausgeführt werden müssen. Während des Betriebs wählt die Druckvorrichtung (20) eine Weiter- und/oder Endbearbeitungsvorrichtung (22, 24) aus, die alle Anforderungen und eine maximale Anzahl von Empfehlungen ausführen kann. Die empfohlenen Weiter- und/oder Endbearbeitungsoperationen sind in einem Speicher der Druckvorrichtung (20) gespeichert, wobei es sich um Standardvorgaben oder um Eingaben eines Druckerbetreibers handeln kann.

FIG. 1

EP 1 234 686 A2

**Beschreibung**

Die vorliegende Erfindung betrifft den Bereich des digitalen Druckens. Insbesondere betrifft die vorliegende Erfindung Verfahren zur Auswahl von Weiter- und/oder Endbearbeitungsvorrichtungen für das digitale Drucken, so genannten Finishing-Geräten.

Das digitale Drucken verändert die Druckindustrie. Beim digitalen Drucken erzeugt ein Kunde eine elektronische Version eines Dokuments und sendet diese an einen Druckerbetreiber, um sie auf ausgewählten Druckvorrichtungen formatieren, drucken und weiter- und/oder endbearbeiten zu lassen. Das digitale Drucken ist für Kunde und Druckerbetreiber gleichermaßen vorteilhaft: Der Kunde hat eine größere Kontrolle darüber, wie das endgültige Dokument aussehen wird, weil er mit der von ihm erstellten elektronischen Version genau seine Vorstellung an den Druckerbetreiber weitergibt. Der Druckerbetreiber wendet weniger Zeit für die Formatierung des Dokuments auf, weil er sofort erkennt, wie sich der Kunde das endgültig gedruckte Dokument vorstellt, zumal er dem Kunden eine korrigierte elektronische Version mit der Bitte um Prüfung und Freigabe zurücksenden kann. Der Druckerbetreiber und der Kunde können ein Dokument zusammen vor dem endgültigen Druckvorgang anhand einer gemeinsamen elektronischen Version überarbeiten.

Der Kunde sendet dem Druckerbetreiber üblicherweise einen Auftrag in einzelnen Teilen zu, oder er erstellt ein zusammenhängendes Dokument in elektronischer Form mit Hilfe einer Software zur Erstellung von Druckdokumenten, wie sie beispielsweise von Adobe Systems Inc. aus Palo Alto, Kalifornien, USA, unter dem Namen "Acrobat" hergestellt wird. Die Software zur Erstellung von Druckdokumenten ermöglicht Kunden die Kombination von Elementen des Dokuments aus Textdateien, Bilddateien und Ausgaben anderer Computerprogramme in einem zusammenhängenden Dokument. Ein Dokument kann beispielsweise zu druckenden Text in einer ausgewählter Schrift aus einer Ausgabedatei eines Textverarbeitungsprogramms enthalten, ein Bitmap-Bild, das als Grafikdatei gespeichert ist, sowie die Ausgabe eines Tabellenkalkulationsprogramms. Die Software zur Erstellung von Druckdokumenten stellt dem Kunden üblicherweise ein sogenanntes WYSIWYG-Bild (what-you-see-is-what-you-get / "du siehst, was du bekommst") an einem Computerbildschirm dar, das ein Abbild des fertigen Druckdokuments ist. Die Software zur Erstellung von Druckdokumenten übernimmt den Inhalt von Dateien in das Dokument, stellt Layout-Funktionen für die Maßstabsanpassung und die Kombination verschiedener Elemente auf der Seite bereit, zeigt das Layout am Computerbildschirm an und gibt ein zusammengesetztes elektronisches Dokument zur Speicherung und Übertragung aus. Die Ergebnisse aus einer Bearbeitung und Umstellung der Elemente können unmittelbar am Computerbildschirm betrachtet werden. Auf diese Weise gewinnen Kunden eine erhebliche Freiheit über den Inhalt und das Layout des Dokuments, während sie die elektronische Version erstellen, ohne sich Gedanken um Druckvorrichtungen und Druckmedien machen zu müssen.

Der Druckerbetreiber ist für die Erstellung eines für die Produktion vorgesehenen, endgültigen, zusammenhängenden Druckdokuments zuständig. Wenn der Kunde seinen Druckauftrag an den Druckerbetreiber in Form einzelner Teile oder separater Dateien sendet, trägt der Druckerbetreiber diese Teile üblicherweise zu einem zusammenhängenden Dokument in Form einer WYSIWYG-Datei zusammen. Alternativ hierzu übermittelt der Kunde dem Druckerbetreiber den Druckauftrag bereits in Form einer WYSIWYG-Datei. Wenn das Dokument druckfertig ist, leitet der Druckerbetreiber die Seiten des Dokuments an verschiedene Druckvorrichtungen, von denen jede für das Drucken in einem bestimmten Format und auf bestimmten Medien geeignet ist. Der Druckerbetreiber kann beispielsweise vorsehen, dass mit Farbgrafik versehene Seiten des Dokuments auf einer Farbdruckvorrichtung gedruckt werden, aber dass reine Textseiten auf einer Schwarzweiß-Druckvorrichtung und nicht auf der Farbdruckvorrichtung gedruckt werden, um dem Kunden Mehrausgaben zu ersparen und die Ressourcen des Druckerbetreibers effizienter zu nutzen. Der Druckerbetreiber fasst Seiten des Dokuments üblicherweise für das getrennte Drucken auf einer entsprechenden Druckvorrichtung zusammen.

An eine Druckvorrichtung können eine oder mehrere Weiter- oder Endbearbeitungsvorrichtungen angeschlossen sein. Nach dem Drucken treten die Seiten durch eine der verfügbaren Weiter- und/oder Endbearbeitungsvorrichtungen, die an die Druckvorrichtung angeschlossen sind. Die Weiter- und/oder Endbearbeitungsvorrichtungen verarbeiten die gedruckten Seiten zum Abschluss des Drucklaufs weiter und können die Seiten einer oder mehreren Weiter- und/oder Endbearbeitungsoperationen unterziehen. Der Druckerbetreiber kann explizit angeben, welche Weiter- und/oder Endbearbeitungsvorrichtungen die Ausgabe der Druckvorrichtung verarbeiten sollen. Die Weiter- und/oder Endbearbeitungsvorrichtung kann beispielsweise die gedruckten Seiten in separaten Gruppen ordnen und dann jede Gruppe zusammenheften. Alternativ hierzu kann die Weiter- und/oder Endbearbeitungsvorrichtung auch nur eine einzige Weiter- und/oder Endbearbeitungsoperation durchführen, beispielsweise stapeln. Auch wenn die Weiterund/oder Endbearbeitungsvorrichtung in der Lage ist, einige der von dem Druckerbetreiber angeforderten Weiter- und/oder Endbearbeitungsoperationen durchzuführen, ist sie möglicherweise nicht in der Lage, diese Operationen für den Druckauftrag durchzuführen, so wie er von der Druckvorrichtung ausgegeben wird. Beispielsweise kann die Druckvorrichtung einen Druckauftrag auf großformatigen Medien ausgeben, während der Sortierer nur Medien im mittleren oder kleinen Format verarbeiten kann. Der Druckerbetreiber muss daher auch die Fähigkeiten der Weiter- und/oder Endbearbeitungsvorrichtungen berücksichtigen, die an die jeweilige Druckvorrichtung angeschlossen sind, wenn er Seiten des Dokuments zu der Druckvorrichtung weiterleitet.

Die Attribute jeder an eine Druckvorrichtung angeschlossenen Weiter- und/oder Endbearbeitungsvorrichtung werden im Speicher der Druckvorrichtung gespeichert. Die Attribute sind üblicherweise Bestandteil eines von dem Hersteller der Druckvorrichtung gelieferten Softwareprogramms. Das Hinzufügen einer weiteren Weiter- und/oder Endbearbeitungsvorrichtung zur Druckvorrichtung, deren Attribute nicht im Speicher abgelegt sind, setzt allerdings voraus, dass der Hersteller ein neues Softwareprogramm schreibt, auf Fehler prüft und verteilt, das die neu hinzugefügte Weiter- und/oder Endbearbeitungsvorrichtung unterstützt. Die Weiter- und/oder Endbearbeitungsvorrichtungen, die an die Druckvorrichtung angeschlossen werden können, sind also auf die Attribute beschränkt, die sich im Speicher der Druckvorrichtung befinden. Der Druckvorrichtung mangelt es daher an einer ausreichenden Flexibilität, um das Anschließen einer neuen Weiter- und/oder Endbearbeitungsvorrichtung ohne Softwareupgrade zu ermöglichen.

Der Druckerbetreiber oder der Kunde können nach Drucken auf der Druckvorrichtung eine bestimmte Weiter- und/oder Endbearbeitungsoperation oder Weiter- und/oder Endbearbeitungsvorrichtung anfordern. Der Kunde oder der Druckerbetreiber können diese bestimmte Weiter- und/oder Endbearbeitungsoperation oder Weiter- und/oder Endbearbeitungsvorrichtung in der WYSIWYG-Datei anfordern. Zur Zeit muss die Druckvorrichtung jedoch ermitteln, ob die geeignete Weiter- und/oder Endbearbeitungsvorrichtung an sie angeschlossen ist, und ob eine entsprechende Funktion programmtechnisch in der Software der Druckvorrichtung vorgesehen ist. Wenn an der Druckvorrichtung die entsprechende Weiter- und/oder Endbearbeitungsvorrichtung an die Druckvorrichtung angeschlossen und die entsprechende Software installiert ist, sendet die Druckvorrichtung die Ausgabe an die entsprechende Weiter- und/oder Endbearbeitungsvorrichtung. Ohne Softwareupgrade kann die Druckvorrichtung jedoch in Ansprechen auf Anweisungen aus der WYSIWYG-Datei nicht automatisch ermitteln, ob an die Druckvorrichtung eine entsprechende Weiter- und/oder Endbearbeitungsvorrichtung angeschlossen ist, um sich dann selbst derart zu konfigurieren, dass sie die Ausgabe an die Weiter- und/oder Endbearbeitungsvorrichtung sendet. Ohne entsprechende Anweisungen in der WYSIWYG-Datei oder ohne Konfiguration durch den Druckerbetreiber kann die Druckvorrichtung zudem nicht automatisch unter mehr als einer Weiter- und/oder Endbearbeitungsvorrichtung wählen.

Der Erfindung liegt daher die Aufgabe zugrunde, ein Verfahren bereitzustellen, nach dem die Druckvorrichtung die Attribute der an sie angeschlossenen Weiter- und/oder Endbearbeitungsvorrichtungen ohne Softwareupgrade ermitteln kann. Dies ließe sich zum Anschließen neuer Weiter- und/oder Endbearbeitungsvorrichtungen an die Druckvorrichtung nutzen.

Weiterhin liegt der Erfindung die Aufgabe zugrunde, ein Verfahren bereitzustellen, nach dem die Druckvorrichtung in der Lage ist, die entsprechende Weiter- und/oder Endbearbeitungsvorrichtung in Ansprechen auf Anweisungen aus der gemeinsamen elektronischen Version des Dokuments zu wählen. Dies ließe sich nutzen, um dem Kunden oder Druckerbetreiber zu ermöglichen, Weiter- und/oder Endbearbeitungsanweisungen in die WYSIWYG-Datei während einiger oder aller Stufen der Dokumentproduktion aufzunehmen.

Weiterhin liegt der Erfindung die Aufgabe zugrunde, ein Verfahren bereitzustellen, nach dem die Druckvorrichtung in der Lage ist, die am besten geeignete Weiter- und/oder Endbearbeitungsvorrichtung nach vorbestimmten Kriterien auszuwählen, wenn keine entsprechenden Anweisungen in der gemeinsamen elektronischen Version des Dokuments vorliegen. Dies ließe sich derart nutzen, dass der Kunde oder Druckerbetreiber der Druckervorrichtung die Wahl der geeigneten Weiter- und/oder Endbearbeitungsvorrichtung überlässt.

Nach einem Aspekt der Erfindung wird ein Verfahren zur Wahl einer Weiter- und/oder Endbearbeitungsvorrichtung für das digitale Drucken bereitgestellt, worin die Weiterund/oder Endbearbeitungsvorrichtung einen Druckauftrag, der aus einer Druckvorrichtung stammt, einer oder mehreren Weiter- und/oder Endbearbeitungsoperationen unterzieht. Das Verfahren umfasst das Empfangen eines Eingabedatenstroms für den Druckauftrag in der Druckvorrichtung. Der Eingabedatenstrom ist eine elektronische Version des Druckauftrags. Die Druckvorrichtung ermittelt, ob die Weiter- und/oder Endbearbeitungsvorrichtung alle geforderten Weiter- und/oder Endbearbeitungsoperationen durchführen kann. Der Eingabedatenstrom umfasst Anweisungen, die den geforderten Weiter- und/oder Endbearbeitungsoperationen zugeordnet sind. Wenn die Weiter- und/oder Endbearbeitungsvorrichtung alle geforderten Weiter- und/oder Endbearbeitungsoperationen durchführen kann, ermittelt die Druckvorrichtung, ob die Weiter- und/oder Endbearbeitungsvorrichtung eine maximale Anzahl empfohlener Weiter- und/oder Endbearbeitungsoperationen durchführen kann. Die Druckvorrichtung beinhaltet die empfohlenen Weiter- und/oder Endbearbeitungsoperationen in einem Speicher. Wenn die Weiter- und/oder Endbearbeitungsvorrichtung die maximale Anzahl der empfohlenen Weiter- und/oder Endbearbeitungsoperationen durchführen kann, leitet die Druckvorrichtung den Druckauftrag zur Weiter- und/oder Endbearbeitungsvorrichtung.

Nach einem weiteren Aspekt der Erfindung wird ein Verfahren zum Verbinden einer Weiter- und/oder Endbearbeitungsvorrichtung mit einer Druckvorrichtung für das digitale Drucken bereitgestellt. Die Weiter- und/oder Endbearbeitungsvorrichtung unterzieht einen Druckauftrag von der Druckvorrichtung einer oder mehreren Weiter- und/oder Endbearbeitungsoperationen. Das Verfahren umfasst das mechanische Befestigen der Weiter- und/oder Endbearbeitungsvorrichtung an der Druckvorrichtung, derart, dass die Weiter- und/oder Endbearbeitungsvorrichtung in der Lage ist, den Druckauftrag von der Druckvorrichtung zu empfangen. Attribute der Weiter- und/oder Endbearbeitungsvorrichtung sind in einem Speicher der Druckvorrichtung gespeichert. Die Attribute der Weiter- und/oder Endbearbeitungsvorrichtung entsprechen einer oder mehreren Weiter- und/oder Endbearbeitungsoperationen.

Die Erfindung wird im folgenden anhand in der Zeichnung dargestellter Ausführungsbeispiele näher erläutert. Es zeigen:

Fig. 1 ein Blockdiagramm zur Darstellung einer Konfiguration eines digitalen Drucksystems;

Fig. 2 ein Ablaufdiagramm zur Darstellung eines bevorzugten Verfahrens zum Anschließen einer Weiter- und/oder Endbearbeitungsvorrichtung an eine Druckvorrichtung für das digitale Drukken in dem digitalen Drucksystem aus Fig. 1; und

Fig. 3 ein Ablaufdiagramm zur Darstellung eines bevorzugten Verfahrens zum Auswählen einer Weiter- und/oder Endbearbeitungsvorrichtung für das digitale Drucken in dem digitalen Drucksystem aus Fig. 1.

Für das digitale Drucken ist es erforderlich, dass ein Druckerbetreiber eine elektronische Version eines zusammengesetzten Dokuments vor dem endgültigen Drucklauf erstellt. Üblicherweise handelt es sich bei dieser elektronischen Version des Dokuments um eine computerlesbare Datei, die in einer sogenannten Seitenbeschreibungssprache geschrieben worden ist (Page Description Language / PDL). PDL-Dateien beinhalten Befehle im ASCII-Format (American Standard Code for Information Interchange). Die Speicherung eines Dokuments in Form einer PDL-Datei hat den Vorteil, dass die PDL-Datei normalerweise viel kleiner ist, als wenn das Dokument als Bitmap-Bilddatei gespeichert würde. Die Druckvorrichtung liest die PDL-Datei und führt Druckfunktionen gemäß der Anweisungen in der PDL-Datei durch. Es ist wesentlich effizienter, Anweisungen an die Druckvorrichtung in Form von ASCII-Code zu senden, als ein Bitmap-Bild des Dokuments zu erstellen und es dann in Bitmap-Form an die Druckvorrichtung zu senden. Beispielsweise ist es wesentlich effizienter, einige ASCII-Zeichen an die Druckvorrichtung zu senden, die die Druckvorrichtung anweisen, die Zeichenfolge "PDL" in der Schrift Times New Roman mit Punktgröße 24 zu drucken, als ein Bitmap-Bild der Zeichenfolge mit einer Auflösung von 600 Punkten pro Zoll (dpi) zu erstellen und dieses Bitmap-Bild dann an die Druckvorrichtung zu senden. Beispiele für PDL-Dateiformate sind das PDF-Format (Portable Document Format / PDF) und das PostScript-Format, die beide von Adobe Systems Inc. aus Palo Alto, Kalifornien, USA, stammen.

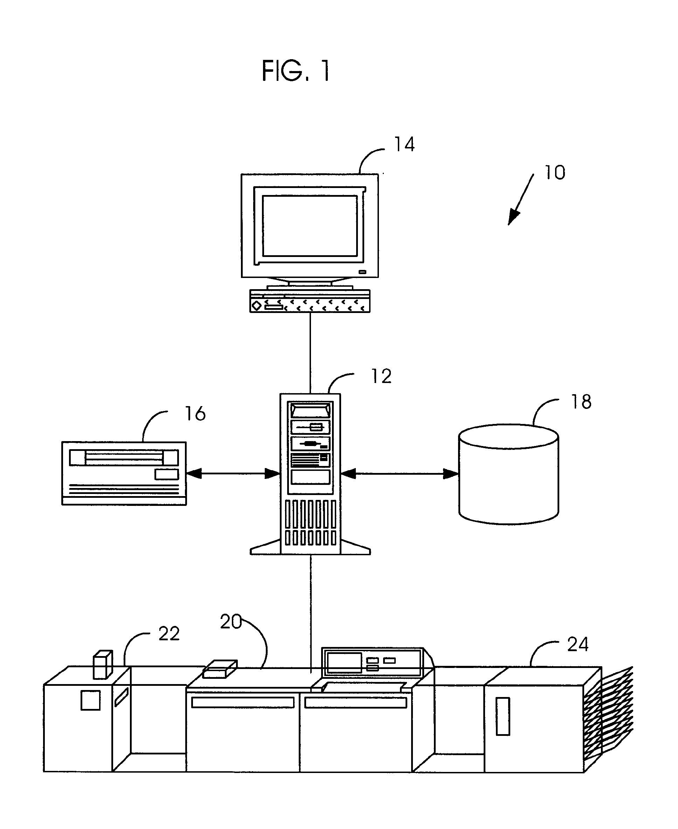

PDL-Dateien werden üblicherweise auf einem computerlesbaren Medium gespeichert und von einem Computer ausgelesen, auf dem ein Druckdokument-Verwaltungsprogramm läuft. Fig. 1 zeigt ein Blockdiagramm eines digitalen Drucksystems 10. Ein Druckerbetreiber formatiert ein Dokument durch Bearbeitung einer elektronischen Version des Dokuments auf einem Computer 12, auf dem ein Druckdokument-Verwaltungsprogramm läuft. Der Druckerbetreiber sieht Änderungen des Dokuments an einem Computerbildschirm 14, der eine WYSIWYG-Darstellung des Dokuments bereitstellt. Die elektronische Version des Dokuments kann von einem portablen, computerlesbaren Medium gelesen oder darauf aufgezeichnet werden, und zwar mit einem Laufwerk 16 für portable Medien, wie einem CD-ROM-Laufwerk, einem Diskettenlaufwerk oder einem Zip-Laufwerk, wie aus der herkömmlichen Computertechnik bekannt. Beispielsweise kann der Kunde eine PDF-Datei auf einer CD-ROM an den Druckerbetreiber übergeben, die der Druckerbetreiber in ein CD-ROM-Laufwerk einlegt, um dann die PDF-Datei in den Speicher des Computers 12 einzulesen. Nach Formatierung des Dokuments mit dem Druckdokument-Verwaltungsprogramm kann der Druckerbetreiber die ergänzte PDF-Datei auf eine andere CD-ROM schreiben und die CD-ROM zur Prüfung an den Kunden zurückgeben. Der Druckerbetreiber kann zudem die elektronische Version auf einem computerlesbaren Speichermedium 18 archivieren, etwa einem Festplattenlaufwerk oder einem Bandlaufwerk.

Wenn die Druckbereitschaft hergestellt ist, weist der Druckerbetreiber den Computer 12 an, einen Teil oder die gesamte PDL-Datei an eine oder an mehrere Druckvorrichtungen 20 in Form eines Datenstroms zu senden. Jede Druckvorrichtung 20 verarbeitet die PDL-Anweisungen in dem Datenstrom, die sie von dem Computer 12 empfängt, und druckt eine oder mehrere Seiten des Dokuments aus. Die Druckvorrichtung 20 sendet die gedruckten Seiten an eine Weiter- und/oder Endbearbeitungsvorrichtung, die aus einer oder aus mehreren Weiter- und/oder Endbearbeitungsvorrichtungen 22, 24 ausgewählt ist. Die ausgewählte Weiter- und/oder Endbearbeitungsvorrichtung 22, 24 verarbeitet die gedruckten Seiten des Dokuments.

Jede Weiter- und/oder Endbearbeitungsvorrichtung ist mechanisch mit der Druckvorrichtung verbunden, wie anhand der Strichlinien in Fig. 1 gezeigt, um die gedruckten Seiten von der Druckvorrichtung zu empfangen. Die Weiter- und/oder Endbearbeitungsvorrichtungen 22, 24 können zudem elektronisch mit der Druckvorrichtung 20 verbunden sein, um von der Druckvorrichtung 20 Anweisungen zur Durchführung der Weiter- und/oder Endbearbeitungsoperationen zu erhalten. Einige Weiter- und/oder Endbearbeitungsvorrichtungen 22, 24 führen nur eine Weiter- oder Endbearbeitungsoperation durch. Beispielsweise heftet ein Hefter 22 nur den Druckäuftrag, den er von der Druckvorrichtung 20 erhält. Alternativ hierzu sind einige Weiter- und/oder Endbearbeitungsvorrichtungen 22, 24 in der Lage, mehr als eine Weiteroder Endbearbeitungsoperation durchzuführen. Beispielsweise heftet und stapelt der Hefter-Stapler 24 üblicherweise den Druckauftrag, den er von der Druckvorrichtung 20 erhält. Einige Weiter- und/oder Endbearbeitungsvorrichtungen 22, 24 müssen zudem stets einen Satz von Weiter- und/oder Endbearbeitungsoperationen durchführen, können jedoch auf Anweisung des Druckerbetreibers oder der Druckvorrichtung 20 optional auch einen anderen Satz von Weiter- und/oder Endbearbeitungsoperationen durchführen. Beispielsweise kann der Hefter-Stapler 24 stets zwingend Druckaufträge stapeln, die er von der Druckvorrichtung 20 erhält, ist aber wahlweise in der Lage, den Druckauftrag zu heften oder nicht zu heften. Die optionalen Weiter- und/oder Endbearbeitungsoperationen sind mechanisch, elektrisch oder mechanisch und elektrisch durch die Druckvorrichtung 20 aktivierbar. Beispiele für andere (nicht gezeigte) Weiter- und/oder Endbearbeitungsvorrichtungen sind u.a. eine Falzmaschine, ein Broschürenmodul, eine Drahtbindemaschine, eine Buchbindemaschine, ein Deckblattanleger sowie viele andere Weiter- und/oder Endbearbeitungsvorrichtungen, die Druckereifachleuten selbstverständlich bekannt sind.

Die vorliegende Erfindung ist allerdings nicht auf die in Fig. 1 gezeigten Vorrichtungen oder Konfiguration beschränkt, sondern es sind auch andere Vorrichtungen und Konfigurationen verwendbar. Beispielsweise kann der Computer 12 in die Druckvorrichtung 20 integriert sein, wobei der Computer 12 und die Druckvorrichtung 20 aus Fig. 1 separate Funktionskomponenten der gemeinsamen Vorrichtung darstellen. Die elektronischen Versionen der Dokumente müssen zudem nicht im PDL-Format vorliegen und müssen nicht auf CD-ROMs, Disketten oder Festplatten gespeichert sein. Es sind viele andere Formate zum Speichern von Dokumenten in elektronischer Form möglich, etwa im grafischen Format und auf anderen Speichermedien, wobei die vorliegende Erfindung nicht auf die hier beschriebenen Formate und Medien beschränkt ist.

Eine Betriebsumgebung für den Computer 12, die Druckvorrichtungen 20, die Weiterund/oder Endbearbeitungsvorrichtungen 22, 24 und andere Vorrichtungen der vorliegenden Erfindung umfassen ein Verarbeitungssystem mit mindestens einer (nicht gezeigten) zentralen Verarbeitungseinheit (Central Processing Unit / CPU) und ein (nicht gezeigtes) Speichersystem. Vorzugsweise steuert eine (nicht gezeigte) CPU den Betrieb des Computers 12. Soweit nicht anders angegeben, werden gemäß der üblichen Praxis von Fachleuten aus dem Bereich der Computerprogrammierung die bevorzugten Verfahren hier mit Bezug auf Vorgänge und symbolische Darstellungen von Operationen beschrieben, die von dem Verarbeitungssystem durchgeführt werden. Im Zuge der Vorgänge und Operationen weist die CPU die Druckvorrichtung 20 an, Schriften zu laden, Diagnosen durchzuführen und PDL-Dateien für das Drucken zu verarbeiten. Die CPU kann das Speichersystem des Computers 12 zudem anweisen, Daten, etwa PDL-Dateien, von dem Laufwerk für portable Medien 16 oder von dem computerlesbaren Speichermedium 18 zu lesen oder auf diese Medien zu schreiben. Eine CPU, auf der die bevorzugten Verfahren ausführbar sind, und die in die bevorzugten Ausführungsbeispiele der Vorrichtung einbeziehbar ist, ist ein Prozessor der Serie "x86" des Herstellers Intel Corporation aus Santa Clara, Kalifornien, USA, obwohl darauf hingewiesen sei, dass die vorliegende Erfindung nicht auf diese Serie von Prozessoren beschränkt ist, und dass auch andere Prozessoren verwendbar sind.

Die Vorgänge und symbolisch dargestellten Operationen umfassen die Bearbeitung elektronischer Signale durch die CPU. Die elektrischen Signale stellen Datenbits dar, die eine resultierende Transformation oder Reduktion der elektrischen Signaldarstellung bewirken. Der Computer 12, die Druckvorrichtungen 20, die Weiter- und/oder Endbearbeitungsvorrichtungen 22, 24 und andere Vorrichtungen beinhalten Datenbits an Speicherorten ihrer jeweiligen Speichersysteme, um den Betrieb ihrer CPU sowie die übrige Signalverarbeitung zu rekonfigurieren oder in sonstiger Weise zu ändern. Die Speicherorte, wie der RAM-Speicher (Random Access Memory), sind physische Orte, die - abhängig von der Art der verwendeten Speichertechnik - bestimmte elektrische, magnetische oder optische Eigenschaften besitzen, die den jeweiligen Datenbits entsprechen.

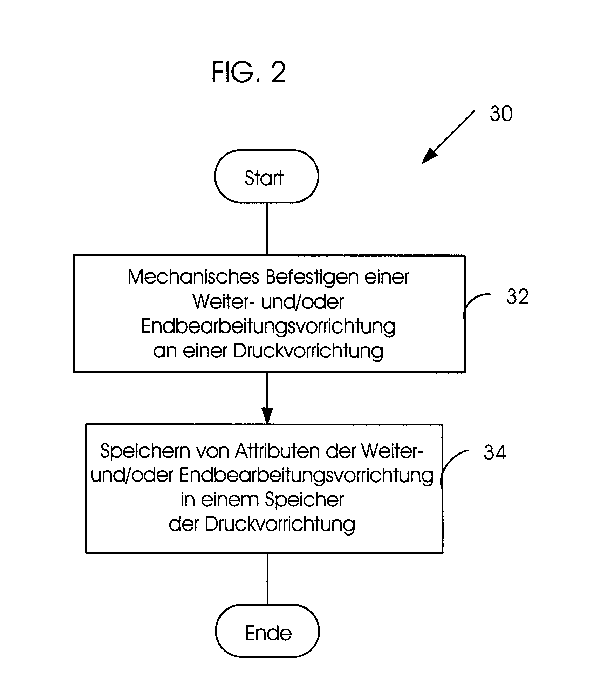

Fig. 2 zeigt ein Ablaufdiagramm zur Darstellung eines bevorzugten Verfahrens 30 für das Anschließen von Weiter- und/oder Endbearbeitungsvorrichtungen 22, 24 an eine Druckvorrichtung 20 für das digitale Drucken. Die Weiter- und/oder Endbearbeitungsvorrichtungen 22, 24 führen eine oder mehrere Weiter- und/oder Endbearbeitungsoperationen für einen Druckauftrag aus der Druckvorrichtung 20 durch. Das Verfahren 30 umfasst in Schritt 32 das mechanische Befestigen der Weiter- und/oder Endbearbeitungsvorrichtungen 22, 24 an der Druckvorrichtung 20 derart, dass die Weiterund/oder Endbearbeitungsvorrichtungen 22, 24 in der Lage sind, den Druckauftrag von der Druckvorrichtung 20 zu erhalten. In Schritt 34 speichert die Druckvorrichtung 20 Attribute der Weiter- und/oder Endbearbeitungsvorrichtungen 22, 24 in einem Speicher der Druckvorrichtung 20. Die Attribute der Weiter- und/oder Endbearbeitungsvorrichtungen 22, 24 entsprechen einer oder mehreren Weiter- und/oder Endbearbeitungsoperationen.

Beispielsweise kann der Druckerbetreiber den Hefter-Stapler 24 mit der Druckvorrichtung 20 durch mechanisches Befestigen des Hefter-Staplers 24 an der Druckvorrichtung 20 verbinden. Der Druckerbetreiber richtet die beiden Vorrichtungen derart passend aufeinander aus, dass der Hefter-Stapler 24 einen Druckauftrag von der Druckvorrichtung 20 entgegennehmen kann. Ein an den Hefter-Stapler 24 geleiteter Druckauftrag tritt aus der Druckvorrichtung 20 heraus und wird dem Hefter-Stapler 24 zugeführt, um dort gestapelt und wahlweise geheftet zu werden. Darüber hinaus kann der Druckerbetreiber die Druckvorrichtung 20 und den Hefter-Stapler 24 elektronisch miteinander verbinden, um den Hefter-Stapler 24 mit elektrischer Energie zu versorgen und elektrische Signale zu übertragen, die den wahlweisen Heftvorgang aktivieren oder deaktivieren, oder anzeigen, wenn Fehler während des Weiter- und/oder Endbearbeitens des Druckauftrags auftreten. Eine Kommunikation kann nicht nur über diese elektrische Verbindung zwischen der Druckvorrichtung und der Weiter- und/oder Endbearbeitungsvorrichtung erfolgen, sondern die Kommunikation kann auch durch eine optische Verbindung erfolgen, beispielsweise durch einen Lichtwellenleiter oder durch Infrarotstrahlung oder durch eine drahtlose Verbindung, wie die drahtlose Verbindung nach dem Bluetooth-Protokoll, wie Fachleuten bekannt sein wird.

In Schritt 34 speichert die Druckvorrichtung 20 nach Anschließen der Vorrichtungen die Attribute der Weiter- und/oder Endbearbeitungsvorrichtungen 22, 24 in ihrem Speicher. Die Attribute der Druckvorrichtung 20 können Pflichtattribute, Wahlattribute, Medienattribute und Plexattribute (Simplex oder Duplexdruck, also einseitiger oder zweiseitiger Druck) der Weiter- und/oder Endbearbeitungsvorrichtungen 22, 24 sein. Beispielsweise kann die Druckvorrichtung 20 die Attribute des Hefter-Staplers 24 speichern, bei denen es sich um Pflichtattribute handelt, beispielsweise dass der Druckauftrag stets gestapelt werden muss, und bei denen es sich um Wahlattribute handelt, beispielsweise der Möglichkeit, den Druckauftrag zu heften. Zudem kann die Druckvorrichtung 20 die Attribute des Hefter-Staplers 24 speichern, die besagen, welche Medien der Hefter-Stapler 24 verarbeiten kann. Beispielsweise kann der Hefter-Stapler 24 ein Medienattribut aufweisen, das besagt, dass er in der Lage ist, A4-Formate zu verarbeiten, jedoch keine A3-Formate. Der Hefter-Stapler 24 kann zudem ein Medienattribut aufweisen, das besagt, dass er in der Lage ist, maximal 30 Bogen eines Mediums zu heften. Eine (nicht gezeigte) Broschürenmaschine kann ein Plexattribut aufweisen, das besagt, dass die Maschine einseitige Ausgaben (Simplexausgaben) von der Druckvorrichtung entgegen nehmen kann, um eine Broschüre herzustellen, das jedoch auch besagt, dass die Maschine doppelseitige Ausgaben (Duplexausgaben) nicht zu Broschüren verarbeiten kann. Im Allgemeinen kann die Druckvorrichtung 20 die Pflichtattribute, Wahlattribute, Plexattribute und Medienattribute jeder Weiter- und/oder Endbearbeitungsvorrichtung 22, 24 speichern, die mit der Druckvorrichtung 20 verbunden ist.

Auf diese Weise kann die Druckvorrichtung 20 ihren Speicher abfragen und ermitteln, ob die Weiter- und/oder Endbearbeitungsvorrichtung 22, 24 über die Attribute verfügt, die es der Weiter- und/oder Endbearbeitungsvorrichtung 22, 24 ermöglichen würden, den Druckauftrag zu verarbeiten. Es sei jedoch darauf hingewiesen, dass die ggf. gespeicherten Attribute der Weiter- und/oder Endbearbeitungsvorrichtung 22, 24 nicht auf die Pflichtattribute, Wahlattribute, Plexattribute oder Medienattribute beschränkt sein müssen, und dass auch andere Attribute in dem Speicher der Druckvorrichtung 20 gespeichert sein können.

Die Attribute der Weiter- und/oder Endbearbeitungsvorrichtung 22, 24 können auf verschiedene Weise in den Speicher der Druckvorrichtung 20 eingegeben werden. In einem bevorzugten Ausführungsbeispiel werden die Attribute aus einem computerlesbaren Medium eingegeben. Beispielsweise können die Attribute der Weiter- und/oder Endbearbeitungsvorrichtung 22, 24 auf einer Diskette oder auf einer CD-ROM als Binärdatei oder als ASCII-Datei codiert sein. Der Druckerbetreiber legt die Diskette oder die CD-ROM in ein der Druckvorrichtung 20 zugeordnetes Plattenlaufwerk ein, worauf die Druckvorrichtung 20 die Attribute aus dem computerlesbaren Medium in ihren eigenen Speicher einliest. Das der Druckvorrichtung 20 zugeordnete Plattenlaufwerk kann das Laufwerk für portable Medien 16 sein, das die elektronische Version des Dokuments einliest. In einem anderen bevorzugten Ausführungsbeispiel kann das computerlesbare Medium einen Strichcode umfassen, der der Weiter- und/oder Endbearbeitungsvorrichtung 22, 24 zugeordnet ist. In diesem Fall tastet der Druckerbetreiber den Strichcode ab, worauf die Druckvorrichtung 20 die Attribute von diesem computerlesbaren Medium in ihren eigenen Speicher einliest. In einem weiteren bevorzugten Ausführungsbeispiel gibt der Druckerbetreiber die Attribute über eine Benutzeroberfläche ein, die der Druckvorrichtung 20 zugeordnet ist. Beispielsweise kann in der Druckvorrichtung 20 eine Benutzeroberfläche integriert sein, etwa eine Tastatur oder eine berührungsempfindliche Grafikanzeige, oder die Benutzeroberfläche umfasst den Computerbildschirm 14 in Verbindung mit dem Computer 12. Sobald die Weiter- und/oder Endbearbeitungsvorrichtung 22, 24 passgenau an die Druckvorrichtung 20 angeschlossen ist, fordert ein auf der Druckvorrichtung 20 oder auf dem Computer 12 laufendes Dienstprogramm den Druckerbetreiber auf, die Attribute über die Benutzeroberfläche einzugeben.

In einem weiteren bevorzugten Ausführungsbeispiel erfährt die Druckvorrichtung 20 die Attribute der Weiter- und/oder Endbearbeitungsvorrichtung 22, 24 aus der elektronischen Version des Druckauftrags. Die elektronische Version des Dokuments liegt in einem PDL-Format vor, etwa als PDF-Datei oder als PostScript-Datei. Beispielsweise kann eine PostScript-Datei einen Header (Vorspann) und einen oder mehrere Abschnitte umfassen, die jeweils einer Seite des Dokuments entsprechen. Die PostScript-Datei enthält die Abschnitte in Folge, beginnend mit dem Abschnitt, der der ersten Seite des Dokuments entspricht, und endend mit dem Abschnitt, der der letzten Seite entspricht. Ein bevorzugtes PDL-Format ist allerdings das PDF-Format. Üblicherweise verarbeitet der Computer 12 die PostScript-Datei sequenziell, um eine bestimmte Seite aufzufinden. Daher muss der Computer 12 alle vorausgehenden Seiten der PostScript-Datei verarbeiten, bevor er eine gesuchte Seite der Gruppe erreicht. Das PDF-Format ermöglicht jedoch eine effizientere Verarbeitung, weil es dem Computer 12 ermöglicht, auf die jeweilige Position in der PDF-Datei zu springen, an der eine gesuchte Seite beginnt.

Die Attribute der Weiter- und/oder Endbearbeitungsvorrichtung 22, 24 können sich in dem Vorspann oder in den Abschnitten des PDL-Datenstroms befinden, der den Seiten des Druckauftrags entspricht. Die PDL-Datei kann die Attribute anhand eines sogenannten "Metatag" identifizieren, wie Fachleuten auf diesem Gebiet bekannt ist. Die Druckvorrichtung 20 empfängt einen Datenstrom für den Druckauftrag im PDL-Format und extrahiert die Attribute der Weiter- und/oder Endbearbeitungsvorrichtung 22, 24 aus dem Datenstrom. Während der Datenstrom verarbeitet wird, erkennt die Druckvorrichtung 20 den Metatag und speichert die dem Metatag zugeordneten Attribute im Speicher der Druckvorrichtung 20.

Allerdings ist das Verfahren zur Eingabe der Attribute der Weiter- und/oder Endbearbeitungsvorrichtung 22, 24 nicht auf die zuvor beschriebenen Ausführungsbeispiele beschränkt. Beispielsweise kann die Weiter- und/oder Endbearbeitungsvorrichtung 22, 24 elektrisch, optisch oder drahtlos mit der Druckvorrichtung 20 in einer Weise verbunden sein, die eine Kommunikation der Vorrichtungen ermöglicht. In diesem Ausführungsbeispiel übermittelt die Weiter- und/oder Endbearbeitungsvorrichtung 22, 24 ihre Attribute über die elektrische, optische oder drahtlose Verbindung an die Druckvorrichtung 20. Alternativ hierzu kann die Druckvorrichtung 20 eine Liste der möglichen Weiter- und/oder Endbearbeitungsvorrichtungen 22, 24 und deren Attribute mitführen. Die Liste ist in der Druckvorrichtung 20 als Teil des Computerprogramms installiert, das die Druckvorrichtung 20 betreibt. Wenn die angeschlossene Weiter- und/oder Endbearbeitungsvorrichtung 22, 24 in der Liste aufgeführt ist, ruft die Druckvorrichtung 20 die Attribute der Weiter- und/oder Endbearbeitungsvorrichtung 22, 24 aus der Liste ab und legt die Attribute im Speicher ab, um zu ermitteln, ob die Weiter- und/oder Endbearbeitungsvorrichtung 22, 24 zur Verarbeitung des Druckauftrags in der Lage ist.

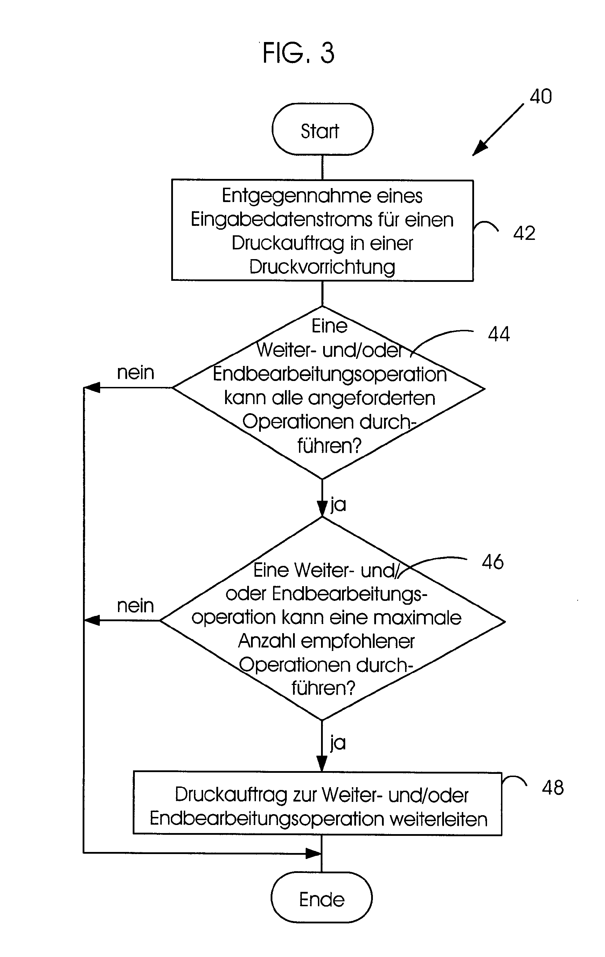

Nachdem die Weiter- und/oder Endbearbeitungsvorrichtung 22, 24 mit der Druckvorrichtung 20 verbunden und die Attribute der Weiter- und/oder Endbearbeitungsvorrichtung 22, 24 in dem Speicher der Druckvorrichtung 20 abgelegt worden sind, kann der Druckerbetreiber Druckaufträge zum Drucken und Weiter- und/oder Endbearbeiten übergeben. Der Druckauftrag wird durch eine Weiter- und/oder Endbearbeitungsvorrichtung 22, 24 verarbeitet, nachdem er auf der Druckvorrichtung 20 gedruckt worden ist. Fig. 3 zeigt ein Ablaufdiagramm zur Darstellung eines bevorzugten Verfahrens 40 für das Auswählen einer Weiter- und/oder Endbearbeitungsvorrichtung 22, 24 für das digitale Drucken. Die Weiter- und/oder Endbearbeitungsvorrichtung 22, 24 unterzieht einen Druckauftrag von der Druckvorrichtung 20 einer oder mehreren Weiterund/oder Endbearbeitungsoperationen. Das Verfahren 40 beinhaltet in Schritt 42 die Entgegennahme eines Eingabedatenstroms für den Druckauftrag in der Druckvorrichtung 20. Der Eingabedatenstrom ist eine elektronische Version des Druckauftrags. In Schritt 44 ermittelt die Druckvorrichtung 20, ob die Weiter- und/oder Endbearbeitungsvorrichtung 22, 24 alle geforderten Weiterund/oder Endbearbeitungsoperationen durchführen kann. Der Eingabedatenstrom umfasst Anweisungen, die den geforderten Weiter- und/oder Endbearbeitungsoperationen zugeordnet sind. Wenn die Weiter- und/oder Endbearbeitungsvorrichtung 22, 24 alle geforderten Weiter- und/oder Endbearbeitungsoperationen durchführen kann, ermittelt die Druckvorrichtung 20 in Schritt 46, ob die Weiter- und/oder Endbearbeitungsvorrichtung 22, 24 eine maximale Anzahl empfohlener Weiter- und/oder Endbearbeitungsoperationen ausführen kann. Die Druckvorrichtung 20 beinhaltet die empfohlenen Weiter- und/oder Endbearbeitungsoperationen in einem Speicher. Wenn die Weiter- und/oder Endbearbeitungsvorrichtung 22, 24 die maximale Anzahl der empfohlenen Weiterund/oder Endbearbeitungsoperationen durchführen kann, leitet die Druckvorrichtung 20 in Schritt 48 den Druckauftrag zur Weiter- und/oder Endbearbeitungsvorrichtung 22, 24 weiter. Auf diese Weise wählt die Druckvorrichtung 20 anhand vorbestimmter Kriterien die am besten für den Druckauftrag geeignete Weiter- und/oder Endbearbeitungsvorrichtung 22, 24.

Wie zuvor beschrieben, sendet der Computer 12 den Druckauftrag als Datenstrom an die Druckvorrichtung 20, der einige oder alle Daten einer PDL-Datei enthält. Die Druckvorrichtung 20 empfängt den Datenstrom und durchsucht den Datenstrom nach Anweisungen, welche Weiter- und/oder Endbearbeitungsoperationen für den Druckauftrag angefordert werden. Die Anweisungen können in Form eines oder mehrerer Metatags im Vorspann oder Hauptteil der PDL-Datei vorliegen. Beispielsweise können in PDL-Dateien, die im PDF-Format vorliegen, die Metatags die in Ausdruck 1 gezeigte Form annehmen:

$$\text{<finish>staple<\backslash finish>} \tag{1}$$

Dieser Ausdruck besagt, dass, wenn der Druckerbetreiber das Drucken und Weiterund/oder Endbearbeiten dieses Druckauftrags anfordert; die Druckvorrichtung 20 ihre Ausgabe an eine Weiter- und/oder Endbearbeitungsvorrichtung 22, 24 übergibt, die in der Lage ist, den Druckauftrag zu heften, falls eine derartige Weiter- und/oder Endbearbeitungsvorrichtung 22, 24 verfügbar ist. Alternativ hierzu, und für PDL-Dateien im Allgemeinen, können die Metatags als ein oder mehrere Kodak Deskriptoren ("KDKs") ausgebildet sein, die Fachleuten im Bereich des digitalen Druckwesens bekannt sind. Die KDKs befinden sich im Vorspann oder Hauptteil der PDL-Datei. KDKs wurden von der Kodak Company aus Rochester, New York, USA, entwickelt, um Druckvorrichtungen 20 aus Dateien heraus zu steuern, in denen der Inhalt von Druckaufträgen codiert ist. In einem bevorzugten Ausführungsbeispiel enthalten die Anweisungen eine Liste der geforderten Weiter- und/oder Endbearbeitungsoperationen, zu deren Durchführung die gewählte Weiter- und/oder Endbearbeitungsvorrichtung 22, 24 in der Lage sein muss. Allerdings brauchen die geforderten Weiter- und/oder Endbearbeitungsoperationen nicht als PDF-Metatag oder als KDK-Metatag ausgebildet zu sein, so dass auch andere Verfahren zur Übergabe der Anweisungen an die Druckvorrichtung 20 möglich sind.

Bei Erhalt der in der PDL-Datei vorhandenen Anweisungen ermittelt die Druckvorrichtung 20, welche Weiter- und/oder Endbearbeitungsvorrichtung 22, 24 gleichzeitig alle geforderten Weiter- und/oder Endbearbeitungsoperationen durchführen kann. Die Druckvorrichtung 20 vergleicht für jede Weiter- und/oder Endbearbeitungsvorrichtung 22, 24, deren Attribute in dem Speicher der Druckvorrichtung 20 abgelegt sind, die geforderten Weiter- und/oder Endbearbeitungsoperationen mit den Attributen. Die Druckvorrichtung 20 kann die geforderten Weiter- und/oder Endbearbeitungsoperationen mit den Pflichtattributen, Wahlattributen, Medienattributen und/oder Plexattributen der Weiter- und/oder Endbearbeitungsvorrichtung 22, 24 vergleichen. Wenn die Attribute der Weiter- und/oder Endbearbeitungsvorrichtung 22, 24 alle geforderten Weiter- und/oder Endbearbeitungsoperationen umfassen, kann die Druckvorrichtung 20 die Weiterund/oder Endbearbeitungsvorrichtung 22, 24 wählen, zu der der Druckauftrag weitergeleitet werden soll. Wenn die Attribute der Weiter- und/oder Endbearbeitungsvorrichtung 22, 24 nicht alle geforderten Weiter- und/oder Endbearbeitungsoperationen umfassen, wählt die Druckvorrichtung 20 die Weiterund/oder Endbearbeitungsvorrichtung 22, 24 nicht aus und leitet den Druckauftrag nicht an die Weiter- und/oder Endbearbeitungsvorrichtung 22, 24 weiter. Wenn keine mit der Druckvorrichtung 20 verbundenen Weiter- und/oder Endbearbeitungsvorrichtungen 22, 24 Attribute aufweisen, die den geforderten Weiter- und/oder Endbearbeitungsoperationen entsprechen, wird normalerweise der Druckauftrag beendet oder in ein oberes Fach der Druckvorrichtung 20 ausgegeben.

Die Druckvorrichtung 20 ermittelt zudem, welche Weiter- und/oder Endbearbeitungsvorrichtung oder welche Weiter- und/oder Endbearbeitungsvorrichtungen 22, 24 die maximale Anzahl empfohlener Druckoptionen ausführen kann. Die empfohlenen Weiter- und/ oder Endbearbeitungsoperationen sind im Speicher der Druckvorrichtung 20 abgelegt. Die empfohlenen Weiter- und/oder Endbearbeitungsoperationen sind Weiter- und/oder Endbearbeitungsoperationen, die der Druckerbetreiber zur Durchführung des Druckauftrags bevorzugen würde. Wenn die Weiter- und/oder Endbearbeitungsvorrichtung 22, 24 die empfohlenen Weiter- und/oder Endbearbeitungsoperationen nicht durchführen kann, könnte die Druckvorrichtung 20 den Druckauftrag dennoch an die Weiter- und/oder Endbearbeitungsvorrichtung 22, 24 senden. In einem bevorzugten Ausführungsbeispiel sind die empfohlenen Weiter- und/ oder Endbearbeitungsoperationen Standardeinstellungen für das Weiter- und/oder Endbearbeiten, die Präferenzen des Druckerbetreibers oder des Herstellers der Druckvorrichtung 20 zur Durchführung von Weiter- und/ oder Endbearbeitungsoperationen darstellen, wenn der Druckauftrag nicht explizit eine Weiter- und/oder Endbearbeitungsoperation anfordert. Beispielsweise kann die Weiter- und/oder Endbearbeitungsstandardoperation das Stapeln der Medien und die Verarbeitung von Medien im Format A4 vorsehen. Wenn keine der Weiter- und/oder Endbearbeitungsvorrichtungen 22, 24, die mit der Druckvorrichtung 20 verbunden sind, Stapelaufträge durchführen kann, kann die Druckvorrichtung 20 die Standardvorgabe ignorieren und den Druckauftrag zu einer beliebigen Weiter- und/oder Endbearbeitungsvorrichtung 22, 24 senden, die zur Durchführung aller geforderten Weiterund/oder Endbearbeitungsoperationen und eines Maximums der anderen empfohlenen Weiter- und/oder Endbearbeitungsoperationen in der Lage ist.

In einem anderen, bevorzugten Ausführungsbeispiel legt der Druckerbetreiber die vorgeschlagenen Weiter- und/oder Endbearbeitungsoperationen in dem Speicher der Druckvorrichtung 20 ab. Beispielsweise gibt der Druckerbetreiber die empfohlenen Weiter- und/ oder Endbearbeitungsoperationen über eine Benutzeroberfläche ein, die der Druckvorrichtung 20 zugeordnet ist. In der Druckvorrichtung 20 kann zudem eine Benutzeroberfläche integriert sein, etwa eine Tastatur oder eine berührungsempfindliche Grafikanzeige, oder die Benutzeroberfläche umfasst den Computerbildschirm 14 in Verbindung mit dem Computer 12. Vor Ausführung des Druckauftrags fordert ein auf der Druckvorrichtung 20 oder auf dem Computer 12 laufendes Dienstprogramm den Druckerbetreiber auf, die empfohlenen Weiter- und/oder Endbearbeitungsoperationen über die Benutzeroberfläche einzugeben. Der Druckerbetreiber kann die empfohlenen Weiterund/oder Endbearbeitungsoperationen nicht nur neu eingeben, sondern auch Standardvorgaben im Speicher sowie empfohlene Weiter- und/oder Endbearbeitungsoperationen ändern, die zuvor eingegeben worden sind.

Während des Betriebs hält die Druckvorrichtung 20 in ihrem Speicher fest, welche der Weiter- und/ oder Endbearbeitungsvorrichtungen 22, 24 für die Druckvorrichtung 20 verfügbar ist, um die Ausgabe der Druckvorrichtung 20 entgegen zu nehmen. Bei der Wahl der Weiter- und/oder Endbearbeitungsvorrichtung 22, 24 zur Entgegennahme der Ausgabe wiederholt die Druckvorrichtung 20 vorzugsweise die zuvor beschriebenen Ermittlungsschritte 44, 46 für jede verfügbare Weiter- und/oder Endbearbeitungsvorrichtung 22, 24, bis die Druckvorrichtung 20 ermittelt hat, welche der verfügbaren Weiter- und/oder Endbearbeitungsvorrichtungen sowohl alle der geforderten Weiter- und/oder Endbearbeitungsoperationen als auch die maximale Zahl der empfohlenen Weiter- und/oder Endbearbeitungsoperationen ausführen kann. Wenn eine Weiter- und/oder Endbearbeitungsvorrichtung 22, 24 sowohl alle der geforderten Weiterund/oder Endbearbeitungsoperationen als auch die maximale Zahl der empfohlenen Weiter- und/oder Endbearbeitungsoperationen ausführen kann, wählt die Druckvorrichtung 20 diese Weiter- und/oder Endbearbeitungsvorrichtung 22, 24 aus, um die geforderten und empfohlenen Weiter- und/oder Endbearbeitungsoperationen für den Druckauftrag durchzuführen. Wenn jedoch mehr als eine der verfügbaren Weiter- und/oder Endbearbeitungsvorrichtungen 22, 24 alle geforderten Weiter- und/oder Endbearbeitungsoperationen und die maximale Zahl der empfohlenen Weiter- und/oder Endbearbeitungsoperationen ausführen kann, kann die Druckvorrichtung 20 willkürlich entscheiden, welche Weiter- und/oder Endbearbeitungsvorrichtung 22, 24 gewählt wird. Alternativ hierzu kann die Druckvorrichtung 20 den Druckerbetreiber auffordern, explizit zwischen den in Frage kommenden Weiter- und/oder Endbearbeitungsvorrichtung 22, 24 zu wählen.

In einem ersten Beispiel ist die Druckvorrichtung 20 mit einem Hefter 22 verbunden. Der Hefter 22 ist in der Lage, Medien im Format A4, Letter (8,5 Zoll x 11 Zoll / 21,59 cm x 27,94 cm) und Legal (8,5 Zoll x 14 Zoll / 21,59 cm x 35,56 cm) von der Druckvorrichtung 20 entgegen zu nehmen. Darüber hinaus besitzt die Druckvorrichtung 20 ein oberes Ausgabefach, in das alle Medienarten geleitet werden können. Die Druckvorrichtung 20 kann den Druckauftrag zum oberen Ausgabefach leiten, ohne irgendwelche Weiterund/oder Endbearbeitungsoperationen durchzuführen. Mit dem Anschließen des Hefters 22 an die Druckvorrichtung 20 speichert der Druckerbetreiber die Attribute des Hefters 22 und das Vorhandensein des oberen Ausgabefachs im Speicher der Druckvorrichtung 20 ab. Der Hefter 22 besitzt ein Pflichtattribut, das besagt, dass er den Heftvorgang durchführen muss, sowie Medienattribute, die besagen, dass er in der Lage ist, Medien im Format A4, Letter und Legal zu heften. Das obere Ausgabefach besitzt keine Attribute. In diesem Beispiel speichert der Druckerbetreiber keine Standardvorgaben oder empfohlene Weiterund/oder Endbearbeitungsoperationen in der Druckvorrichtung 20.

Der Druckerbetreiber sendet einen Druckauftrag an die Druckvorrichtung 20. Das vorliegende Beispiel sieht vor, den Druckauftrag zu heften und auf Medien im Format "Letter" (8,5 Zoll x 11 Zoll / 21,59 cm x 27,94 cm) zu drucken. Die Druckvorrichtung 20 nimmt den Druckauftrag als PDL-Datei in Form eines Datenstroms entgegen. Die PDL-Datei beinhaltet KDKs oder andere Metatags als Anweisungen an die Druckvorrichtung 20, den Druckauftrag zu heften und auf Medien im Format "Letter" zu drucken. Die Druckvorrichtung 20 vergleicht die angeforderte Weiter- und/oder Endbearbeitungsoperation, nämlich das Heften und Bedrucken auf dem Format "Letter", mit den Attributen des Hefters 22. Da der Hefter 22 in der Lage ist, Medien im Format "Letter" zu heften, und da sich im Speicher der Druckvorrichtung 20 keine Empfehlungen für weitere Weiter- und/oder Endbearbeitungsoperationen befinden, wählt die Druckvorrichtung 20 den Hefter 22, um den Druckauftrag auszurüsten. Die Druckvorrichtung 20 vergleich die angeforderten Weiter- und/oder Endbearbeitungsoperationen mit den Attributen des oberen Ausgabefachs. Da das obere Ausgabefach nicht in der Lage ist, eine Heftung durchzuführen, wählt die Druckvorrichtung 20 das obere Ausgabefach nicht. Im vorliegenden Beispiel wählt die Druckvorrichtung 20 daher den Hefter 22 als Weiter- und/oder Endbearbeitungsvorrichtung 22, 24 für den Druckauftrag. Nachdem der Druckauftrag auf Medien im Format "Letter" gedruckt worden ist, leitet die Druckvorrichtung 20 den Druckauftrag an den Hefter 22 weiter.

In einem zweiten Beispiel ist die Druckvorrichtung 20 mit einem Hefter 22 und einem Hefter-Stapler 24 verbunden. Der Hefter-Stapler 24 kann alle Medienformate heften und stapeln. Darüber hinaus besitzt die Druckvorrichtung 20 ein oberes Ausgabefach, in das alle Medienarten geleitet werden können. Die Druckvorrichtung 20 kann den Druckauftrag zum oberen Ausgabefach leiten, ohne irgendwelche Weiter- und/oder Endbearbeitungsoperationen durchzuführen. Mit dem Anschließen des Hefters 22 an die Druckvorrichtung 20 speichert der Druckerbetreiber die Attribute des Hefters 22, des Hefter-Staplers 24 und das Vorhandensein des oberen Ausgabefachs im Speicher der Druckvorrichtung 20 ab. Der Hefter 22 besitzt ein Pflichtattribut, das besagt, dass er den Heftvorgang durchführen muss, sowie Medienattribute, die besagen, dass er in der Lage ist, Medien im Format A4, Letter und Legal zu heften. Der Hefter-Stapler 24 besitzt ein Pflichtattribut, das besagt, dass er stapeln muss, ein Wahlattribut, das besagt, dass er heften kann, sowie Medienattribute, die besagen, dass er in der Lage ist, Medien in allen Formaten zu heften und zu stapeln. Das obere Ausgabefach besitzt keine Attribute. In diesem Beispiel empfiehlt die Druckvorrichtung 20 zudem, alle Druckaufträge zu stapeln. Entweder ist eine empfohlene Weiter- und/oder Endbearbeitungsoperation in der Druckvorrichtung 20 gespeichert, oder das Stapeln ist als Vorgabe im Speicher der Druckvorrichtung 20 abgelegt.

Der Druckerbetreiber sendet einen Druckauftrag an die Druckvorrichtung 20. Das vorliegende Beispiel sieht vor, den Druckauftrag zu heften und auf Medien im Format "Letter" (8,5 Zoll x 11 Zoll / 21,59 cm x 27,94 cm) zu drucken. Die Druckvorrichtung 20 nimmt den Druckauftrag als PDL-Datei in Form eines Datenstroms entgegen. Die PDL-Datei beinhaltet KDKs oder andere Metatags als Anweisungen an die Druckvorrichtung 20, den Druckauftrag zu heften und auf Medien im Format "Letter" zu drucken. Die Druckvorrichtung 20 vergleicht die angeforderte Weiter- und/oder Endbearbeitungsoperation, nämlich das Heften und Bedrucken auf dem Format "Letter", mit den Attributen des Hefters 22. Der Hefter 22 kann zwar die geforderten Weiterund/oder Endbearbeitungsoperationen zum Heften von Medien im Format "Letter" durchführen, aber er kann nicht das empfohlene Stapeln durchführen. Der Hefter 22 kann daher alle geforderten Weiter- und/oder Endbearbeitungsoperationen durchführen, jedoch nicht die empfohlenen Weiter- und/oder Endbearbeitungsoperationen. Die Druckvorrichtung 20 vergleicht die angeforderte Weiter- und/oder Endbearbeitungsoperation, nämlich das Heften des Formats "Letter", mit den Attributen des Hefter-Staplers 24. Das Heften ist ein optionales Attribut des Hefter-Staplers 24. Der Hefter 24 kann die geforderte Weiter- und/oder Endbearbeitungsoperation zum Heften von Medien im Format "Letter" durchführen und er kann das empfohlene Stapeln durchführen. Das Stapeln ist ein Pflichtattribut des Hefter-Staplers 24. Der Hefter-Stapler 24 kann daher alle geforderten Weiter- und/oder Endbearbeitungsoperationen und eine empfohlene Weiter- und/oder Endbearbeitungsoperation durchführen. Die Druckvorrichtung 20 vergleicht die angeforderten Weiter- und/oder Endbearbeitungsoperationen mit den Attributen des oberen Ausgabefachs. Da das obere Ausgabefach nicht in der Lage ist, eine Heftung durchzuführen, wählt die Druckvorrichtung 20 das obere Ausgabefach nicht. In diesem Beispiel wählt die Druckvorrichtung 20 den Hefter-Stapler 24 als Weiter- und/oder Endbearbeitungsvorrichtung 22, 24 für den Druckauftrag, weil sie alle geforderten Weiterund/oder Endbearbeitungsoperationen und die maximale Zahl, nämlich eins, der empfohlenen Weiter- und/oder Endbearbeitungsoperationen ausführen kann. Nachdem der Druckauftrag auf Medien im Format "Letter" gedruckt worden ist, leitet die Druckvorrichtung 20 den Druckauftrag an den Hefter-Stapler 24 weiter.

In einem dritten Beispiel ist die Druckvorrichtung 20 mit einem Hefter 22 und einem Hefter-Stapler 24 verbunden. Der Hefter-Stapler 24 kann alle Medienformate heften und stapeln. Darüber hinaus besitzt die Druckvorrichtung 20 ein oberes Ausgabefach, in das alle Medienarten geleitet werden können. Die Druckvorrichtung 20 kann den Druckauftrag zum oberen Ausgabefach leiten, ohne irgendwelche Weiter- und/oder Endbearbeitungsoperationen durchzuführen. Mit dem Anschließen des Hefters 22 und des Hefter-Staplers 24 an die Druckvorrichtung 20 speichert der Druckerbetreiber die Attribute des Hefters 22 und des Hefter-Staplers 24 im Speicher der Druckvorrichtung 20 ab. Der Hefter 22 besitzt ein Pflichtattribut, das besagt, dass er den Heftvorgang durchführen muss, sowie Medienattribute, die besagen, dass er in der Lage ist, Medien im Format A4, Letter und Legal zu heften. Der Hefter-Stapler 24 besitzt ein Pflichtattribut, das besagt, dass er stapeln muss, ein Wahlattribut, das besagt, dass er heften kann, sowie Medienattribute, die besagen, dass er in der Lage ist, Medien in allen Formaten zu heften und zu stapeln. Das obere Ausgabefach besitzt keine Attribute. In diesem Beispiel empfiehlt die Druckvorrichtung 20 zudem, alle Druckaufträge zu stapeln und zu falzen. Entweder speichert der Druckerbetreiber das Stapeln und Falzen als eine empfohlene Weiter- und/oder Endbearbeitungsoperation in der Druckvorrichtung 20, oder das Stapeln und Falzen ist bereits als eine Vorgabe in dem Speicher der Druckvorrichtung 20 gespeichert.

Der Druckerbetreiber sendet einen Druckauftrag an die Druckvorrichtung 20. Das vorliegende Beispiel sieht vor, den Druckauftrag zu heften und auf Medien im Format "Letter" (8,5 Zoll x 11 Zoll / 21,59 cm x 27,94 cm) zu drucken. Die Druckvorrichtung 20 nimmt den Druckauftrag als PDL-Datei in Form eines Datenstroms entgegen. Die PDL-Datei beinhaltet KDKs oder andere Metatags als Anweisungen an die Druckvorrichtung 20, den Druckauftrag zu heften und auf Medien im Format "Letter" zu drucken. Die Druckvorrichtung 20 vergleicht die angeforderte Weiter- und/oder Endbearbeitungsoperation, nämlich das Heften auf dem Format "Letter", mit den Attributen des Hefters 22. Der Hefter 22 kann zwar die geforderten Weiter- und/oder Endbearbeitungsoperationen zum Heften von Medien im Format "Letter" durchführen, aber er kann das empfohlene Stapeln und Falzen nicht durchführen. Der Hefter 22 kann daher alle geforderten Weiter- und/oder Endbearbeitungsoperationen durchführen, jedoch nicht die empfohlenen Weiter- und/oder Endbearbeitungsoperationen. Die Druckvorrichtung 20 vergleicht die angeforderte Weiter- und/oder Endbearbeitungsoperation, nämlich das Heften des Formats "Letter", mit den Attributen des Hefter-Staplers 24. Das Heften ist ein optionales Attribut des Hefter-Staplers 24. Der Hefter 24 kann die geforderte Weiter- und/oder Endbearbeitungsoperation zum Heften von Medien im Format "Letter" durchführen und er kann das empfohlene Stapeln durchführen. Das Stapeln ist ein Pflichtattribut des Hefter-Staplers 24. Der Hefter-Stapler 24 kann jedoch die empfohlene Weiter- und/oder Endbearbeitungsoperationen des Falzens nicht durchführen. Der Hefter-Stapler 24 kann daher alle geforderten Weiter- und/oder Endbearbeitungsoperationen und eine empfohlene Weiter- und/oder Endbearbeitungsoperation durchführen. Die Druckvorrichtung 20 vergleicht die angeforderten Weiter- und/oder Endbearbeitungsoperationen mit den Attributen des oberen Ausgabefachs. Da das obere Ausgabefach nicht in der Lage ist, eine Heftung durchzuführen, wählt die Druckvorrichtung 20 das obere Ausgabefach nicht. In diesem Beispiel wählt die Druckvorrichtung 20 den Hefter-Stapler 24 als Weiter- und/oder Endbearbeitungsvorrichtung 22, 24 für den Druckauftrag, weil sie alle geforderten Weiterund/oder Endbearbeitungsoperationen und die maximale Zahl, nämlich eins, der empfohlenen Weiter- und/oder Endbearbeitungsoperationen ausführen kann. Die Druckvorrichtung 20 wählt den Hefter-Stapler 24 als Weiter- und/oder Endbearbeitungsvorrichtung 22, 24 für den Druckauftrag, obwohl sie die empfohlene Falzoperation nicht ausführen kann. Nachdem der Druckauftrag auf Medien im Format "Letter" gedruckt worden ist, leitet die Druckvorrichtung 20 den Druckauftrag an den Hefter-Stapler 24 weiter.

Die hier beschriebenen Programme, Prozesse, Verfahren und Vorrichtungen sind nicht auf eine bestimmte Hardwarebauart (Hardware oder Software) beschränkt oder betreffen diese, es sei denn, es wird ausdrücklich darauf hingewiesen. Es sind verschiedene Arten allgemeiner oder spezieller Computervorrichtungen erfindungsgemäß verwendbar.

Angesichts der Vielzahl von Ausführungsbeispielen, auf die die vorliegende Erfindung anwendbar ist, sei darauf hingewiesen, dass die genannten Ausführungsbeispiele nur exemplarischen Zwecken dienen und den Geltungsbereich der vorliegenden Erfindung nicht einschränken. Die in den Ablaufdiagrammen gezeigten Schritte können beispielsweise in anderer Folge als der beschriebenen durchlaufen werden, und es sind in den Blockdiagrammen mehr oder weniger Elemente oder Komponenten verwendbar.

**Liste der Bezugszeichen**

| 10 | Drucksystem |
|---|---|
| 12 | Computer |
| 14 | Computerbildschirm |
| 16 | Laufwerk für portable Medien |
| 18 | computerlesbares Speichermedium |
| 20 | Druckvorrichtung |
| 22, 24 | Weiter- und/oder Endbearbeitungsvorrichtungen |
| 22 | Hefter |
| 24 | Hefter-Stapler |
| 30 | bevorzugtes Verfahren |
| 32 | Verfahrensschritt |
| 34 | Verfahrensschritt |
| 40 | bevorzugtes Verfahren |
| 42 | Verfahrensschritt |
| 44 | Verfahrensschritt |
| 46 | Verfahrensschritt |
| 48 | Verfahrensschritt |

**Patentansprüche**

1. Verfahren zur Wahl einer Weiter- und/oder Endbearbeitungsvorrichtung (22, 24) an eine Druckvorrichtung (20) für das digitale Drucken, wobei die Weiter- und/oder Endbearbeitungsvorrichtung an einem Druckauftrag, der aus der Druckvorrichtung (20) stammt, einen oder mehrere Weiter- und/oder Endbearbeitungsoperationen durchführt, wobei das Verfahren folgende Schritte umfasst:

   - Entgegennehmen eines Datenstroms für den Druckauftrag in der Druckvorrichtung (20), wobei der Datenstrom eine elektronische Version des Druckauftrags ist;

   - Ermitteln, ob die Weiter- und/oder Endbearbeitungsvorrichtung (22, 24) alle angeforderten Weiter- und/oder Endbearbeitungsoperationen durchführen kann, wobei der Datenstrom Anweisungen umfasst, die den angeforderten Weiterund/oder Endbearbeitungsoperationen zugeordnet sind;

   - wenn die Weiter- und/oder Endbearbeitungsvorrichtung (22, 24) alle angeforderten Weiterund/oder Endbearbeitungsoperationen durchführen kann, Ermitteln, ob die Weiter- und/oder Endbearbeitungsvorrichtung (22, 24) eine maximale Anzahl empfohlener Weiter- und/oder Endbearbeitungsoperationen durchführen kann, wobei die Druckvorrichtung (20) die empfohlenen Weiterund/oder Endbearbeitungsoperationen in einem Speicher beinhaltet; und

   - wenn die Weiter- und/oder Endbearbeitungsvorrichtung (22, 24) die maximale Anzahl der empfohlenen Weiter- und/oder Endbearbeitungsoperationen durchführen kann, Weiterleiten des Druckauftrags an die Weiter- und/oder Endbearbeitungsvorrichtung (22, 24).

2. Verfahren nach Anspruch 1, das zudem folgenden Schritt umfasst:

   - Wiederholen der Ermittlungsschritte für jede verfügbare Weiter- und/oder Endbearbeitungsvorrichtung (22, 24) aus einer oder mehreren Weiter- und/oder Endbearbeitungsvorrichtungen (22, 24), bis die Weiter- und/oder Endbearbeitungsvorrichtung (22, 24) gewählt ist.

3. Verfahren nach einem der Ansprüche 1 bis 2, das zudem folgenden Schritt umfasst:

   - wenn die Weiter- und/oder Endbearbeitungsvorrichtung (22, 24) nicht alle angeforderten Weiter- und/oder Endbearbeitungsoperationen ausführen kann, nicht Weiterleiten des Druckauftrags an die Weiter- und/oder Endbearbeitungsvorrichtung (22, 24).

4. Verfahren nach einem der Ansprüche 1 bis 2, das zudem folgenden Schritt umfasst:

   - wenn die Weiter- und/oder Endbearbeitungsvorrichtung (22, 24) die maximale Anzahl der empfohlenen Weiter- und/oder Endbearbeitungsoperationen nicht durchführen kann, nicht Weiterleiten des Druckauftrags an die Weiter- und/oder Endbearbeitungsvorrichtung (22, 24).

5. Verfahren nach einem der Ansprüche 1 bis 4, das zudem folgenden Schritt umfasst:

   - Speichern der empfohlenen Weiter- und/oder Endbearbeitungsoperationen im Speicher der Druckvorrichtung (20).

6. Verfahren nach einem der Ansprüche 1 bis 5, **dadurch gekennzeichnet,** **dass** die empfohlenen Weiter- und/oder Endbearbeitungsoperationen Vorgaben der Druckvorrichtung (20) sind.

7. Verfahren zum Anschließen einer Weiter- und/oder Endbearbeitungsvorrichtung (22, 24) an eine Druckvorrichtung (20) für das digitale Drucken, wobei die Weiterund/oder Endbearbeitungsvorrichtung an einem Druckauftrag, der aus der Druckvorrichtung (20) stammt, einen oder mehrere Weiter- und/oder Endbearbeitungsoperationen durchführt, wobei das Verfahren folgende Schritte umfasst:

   - mechanisches Befestigen der Weiter- und/oder Endbearbeitungsvorrichtung (22, 24) an der Druckvorrichtung (20), derart, dass die Weiter- und/oder Endbearbeitungsvorrichtung in der Lage ist, den Druckauftrag von der Druckvorrichtung zu empfangen; und
   - Speichern der Attribute der Weiter- und/oder Endbearbeitungsvorrichtung (22, 24) in einem Speicher der Druckvorrichtung (20), wobei die Attribute der Weiterund/oder Endbearbeitungsvorrichtung (22, 24) der einen Weiter- und/oder Endbearbeitungsoperation oder mehreren Weiter- und/oder Endbearbeitungsoperationen entsprechen.

8. Verfahren nach Anspruch 7, **dadurch gekennzeichnet,** **dass** der Speicherschritt folgende Schritte umfasst:

   - Speichern von Pflichtattributen der Weiter- und/oder Endbearbeitungsvorrichtung (22, 24) im Speicher der Druckvorrichtung (20), wobei die Pflichtattribute den Weiter- und/oder Endbearbeitungsoperationen entsprechen, die die Weiterund/oder Endbearbeitungsvorrichtung (22, 24) für den Druckauftrag ausführen muss;
   - Speichern von Wahlattributen der Weiter- und/ oder Endbearbeitungsvorrichtung (22, 24) im Speicher der Druckvorrichtung (20), wobei die Wahlattribute Weiterund/oder Endbearbeitungsoperationen entsprechen, die die Weiter- und/oder Endbearbeitungsvorrichtung (22,24) für den Druckauftrag ausführen kann, aber nicht ausführen muss; und
   - Speichern von Medienattributen der Weiter- und/oder Endbearbeitungsvorrichtung (22, 24) im Speicher der Druckvorrichtung (20), wobei die Medienattribute verarbeitbaren Medien entsprechen, die die Weiterund/oder Endbearbeitungsvorrichtung (22, 24) von der Druckvorrichtung (20) entgegennehmen kann.

9. Verfahren nach einem der Ansprüche 7 bis 8, das zudem folgenden Schritt umfasst:

   - Speichern von Plexattributen der Weiter- und/ oder Endbearbeitungsvorrichtung (22, 24) im Speicher der Druckvorrichtung (20), wobei die Plexattribute aus der Gruppe auswählbar sind, die Attribute für einseitigen und doppelseitigen Druck umfasst.

10. Verfahren nach einem der Ansprüche 7 bis 9, **dadurch gekennzeichnet,** **dass** der Speicherschritt folgende Schritte umfasst:

   - Entgegennehmen eines Eingabedatenstroms für den Druckauftrag in der Druckvorrichtung (20), wobei der Datenstrom eine elektronische Version des Druckauftrags ist;
   - Extrahieren der Attribute der Weiter- und/oder Endbearbeitungsvorrichtung (22, 24) aus dem Eingabedatenstrom; und
   - Speichern der Attribute der Weiter- und/oder Endbearbeitungsvorrichtung (22, 24) im Speicher.

11. Verfahren nach einem der Ansprüche 7 bis 9, **dadurch gekennzeichnet,** **dass** der Speicherschritt folgenden Schritt umfasst:

   - Eingeben der Attribute der Weiter- und/oder Endbearbeitungsvorrichtung (22,24) über eine Benutzeroberfläche in den Speicher.

12. Verfahren nach einem der Ansprüche 7 bis 9, **dadurch gekennzeichnet,** **dass** der Speicherschritt folgenden Schritt umfasst:

   - Kopieren der Attribute der Weiter- und/oder Endbearbeitungsvorrichtung (22, 24) aus einem computerlesbaren Medium (18) in den Speicher.

13. Verfahren zur Wahl einer Weiter- und/oder Endbearbeitungsvorrichtung (22, 24) für das digitale Drucken, worin die Weiter- und/oder Endbearbeitungsvorrichtung bei einem Druckauftrag, der aus einer Druckvorrichtung stammt, eine oder mehrere Weiter- und/oder Endbearbeitungsoperationen durchführt, wobei das Verfahren folgende Schritte umfasst:

- Entgegennehmen eines Datenstroms für den Druckauftrag in der Druckvorrichtung (20), wobei der Datenstrom des Druckauftrags in einer Seitenbeschreibungssprache (Page Description Language / PDL) formatiert ist;
- Ermitteln, ob die Weiter- und/oder Endbearbeitungsvorrichtung (22, 24) alle angeforderten Weiter- und/oder Endbearbeitungsoperationen durchführen kann, wobei der Datenstrom eine oder mehrere Metatags umfasst, die den angeforderten Weiter- und/oder Endbearbeitungsoperationen zugeordnet sind;
- wenn die Weiter- und/oder Endbearbeitungsvorrichtung (22, 24) nicht alle angeforderten Weiter- und/oder Endbearbeitungsoperationen ausführen kann, nicht Weiterleiten des Druckauftrags an die Weiter- und/oder Endbearbeitungsvorrichtung (22, 24);
- wenn die Weiter- und/oder Endbearbeitungsvorrichtung (22, 24) alle angeforderten Weiter- und/oder Endbearbeitungsoperationen durchführen kann, Ermitteln, ob die Weiter- und/oder Endbearbeitungsvorrichtung (22, 24) eine maximale Anzahl vorgeschlagener Weiter- und/oder Endbearbeitungsoperationen durchführen kann, wobei die Druckvorrichtung (20) die vorgeschlagenen Weiterund/oder Endbearbeitungsoperationen in einem Speicher beinhaltet;
- wenn die Weiter- und/oder Endbearbeitungsvorrichtung (22, 24) die maximale Anzahl der empfohlenen Weiter- und/oder Endbearbeitungsoperationen nicht durchführen kann, nicht Weiterleiten des Druckauftrags an die Weiter- und/oder Endbearbeitungsvorrichtung (22, 24); und
- wenn die Weiter- und/oder Endbearbeitungsvorrichtung (22, 24) die maximale Anzahl der empfohlenen Weiter- und/oder Endbearbeitungsoperationen durchführen kann, Weiterleiten des Druckauftrags an die Weiter- und/oder Endbearbeitungsvorrichtung (22, 24).

14. Verfahren nach einem der Ansprüche 1 bis 6, **dadurch gekennzeichnet,** **dass** die elektronische Version des Dokuments in einer Seitenbeschreibungssprache (Page Description Language / PDL) formatiert ist.

15. Verfahren nach einem der Ansprüche 13 bis 14, **dadurch gekennzeichnet,** **dass** die Seitenbeschreibungssprache ein austauschbares Dokumentformat (Portable Document Format / PDF) ist.

16. Verfahren nach einem der Ansprüche 13 bis 15, **dadurch gekennzeichnet,** **dass** die den angeforderten Weiter- und/oder Endbearbeitungsoperationen zugeordneten Anweisungen ein oder mehrere Metatags umfassen.

17. Computerlesbares Medium (18) mit darauf gespeicherten Anweisungen zur Veranlassung einer zentralen Verarbeitungseinheit, das Verfahren nach einem der Ansprüche 1 bis 6 oder 13 bis 16 auszuführen.

# FIG. 1

FIG. 2

30

```
        ┌──────────┐
        │  Start   │
        └──────────┘
             │
             │
┌────────────────────────────────┐
│  Mechanisches Befestigen einer │      32
│        Weiter- und/oder        │
│   Endbearbeitungsvorrichtung   │
│     an einer Druckvorrichtung  │
└────────────────────────────────┘
             │
             ▼
┌────────────────────────────────┐
│ Speichern von Attributen der Weiter-│   34
│ und/oder Endbearbeitungsvorrichtung │
│         in einem Speicher           │
│         der Druckvorrichtung        │
└────────────────────────────────┘
             │
        ┌──────────┐
        │   Ende   │
        └──────────┘
```

# FIG. 3

40

```
        ┌──────────┐
        │  Start   │
        └──────────┘
              │
┌─────────────────────────────┐
│  Entgegennahme eines         │
│  Eingabedatenstroms für einen│      42
│  Druckauftrag in einer       │
│  Druckvorrichtung            │
└─────────────────────────────┘
              │
```

Eine
Weiter- und/oder
Endbearbeitungsoperation
kann alle angeforderten
Operationen durchführen?
44

nein

ja

Eine Weiter- und/
oder Endbearbeitungsoperation kann eine maximale
Anzahl empfohlener
Operationen durchführen?
46

nein

ja

Druckauftrag zur Weiter- und/oder
Endbearbeitungsoperation weiterleiten
48

Ende